# EUROPÄISCHE PATENTSCHRIFT

(11) **EP 4 507 918 B1**
(45) Veröffentlichungstag und Bekanntmachung des Hinweises auf die Patenterteilung: **24.06.2026**
(21) Anmeldenummer: 23717965.0
(22) Anmeldetag: 12.04.2023
(51) Int. Cl.: B60L 53/16, B60L 53/302

(54) **STECKVERBINDER**
PLUG CONNECTOR
CONNECTEUR ENFICHABLE

(30) Priorität: 14.04.2022 DE 102022109244
(43) Veröffentlichungstag der Anmeldung: 19.02.2025
(73) Patentinhaber: Amphenol Tuchel Industrial GmbH, 74080 Heilbronn (DE)
(72) Erfinder: NÜCHTER, Peter, 89079 Ulm (DE); HEGI, Jan, 3072 Ostermundigen (CH); LÄMMLE, Christian, 8332 Russikon (CH); WÜTHRICH, Mirco, 8422 Pfungen (CH); BECK, Marc-André, 8330 Pfäffikon (CH)
(74) Vertreter: Staeger & Sperling Partnerschaftsgesellschaft mbB
(86) Internationale Anmeldenummer: PCT/EP2023/059516
(87) Internationale Veröffentlichungsnummer: WO 2023/198750

(56) Entgegenhaltungen:
- EP-A1- 3 611 738
- EP-A1- 3 768 546
- WO-A1-2021/091216
- DE-A1- 102015 112 347
- DE-B3- 102010 050 562
- KR-A- 20210 065 615
- KR-A- 20220 112 722
- US-A- 5 909 099
- US-A1- 2015 217 654
- US-A1- 2019 074 620

## Beschreibung

Die Erfindung betrifft einen Steckverbinder, ausgebildet zur Übertragung elektrischer Leistung über wenigstens zwei in einem Kontaktträger gelagerte Kontaktteile und zur Kühlung derselben bei der Übertragung elektrischer Leistung, mit je einem Verbindungselement, an dem eine elektrische Leitung verbunden ist.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse, beispielsweise zum Aufladen eines elektrisch angetriebenen Fahrzeugs, Verwendung finden. In diesem Fall ist ein Kabel einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

Aus dem Dokument EP 3 768 546 A1 ist ein gekühlter Ladestecker bekannt, welcher eine erste elektrische Buchse und eine zweite elektrische Buchse umfasst. Es sind eine erste Hülse und eine zweite Hülse vorgesehen, wobei die erste Hülse konzentrisch mit der ersten elektrischen Buchse und die zweite Hülse konzentrisch mit der zweiten elektrischen Buchse verbunden ist. Ferner ist eine Einlassleitung und eine Auslassleitung innerhalb der Verteilerbaugruppe vorgesehen, sodass die Einlassleitung, der Innenraum und die Auslassleitung zusammen einen Fluidströmungsweg bilden.

Die WO 2021/091216 A1 betrifft eine Kabelbaugruppe zum Laden eines Elektrofahrzeugs, die mithilfe einer Kühlflüssigkeit die beim Laden eines Elektrofahrzeugs von einem Kabel zum Laden eines Elektrofahrzeugs und einem Stecker erzeugte Wärme effizient kühlt, Schäden an der inneren Struktur durch Hitze verhindert, Sicherheitsunfälle verhindert, Unannehmlichkeiten für den Benutzer minimiert und eine Minimierung des Durchmessers des Kabels zum Laden des Elektrofahrzeugs ermöglicht.

Aus der KR 10-2021-0065615 A ist eine weitere gekühlte Ladelösung bekannt, bei der der Ladestecker über eine Hin- und Rückleitung zum Führen einer Kühlflüssigkeit verfügt, um die Ladeleitung zu kühlen.

Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A, aufweisen und zu einer Erwärmung des Kabels, genauso wie eines mit dem Kabel verbundenen Hochstromkontaktes führen können.

Bei einem Ladevorgang von elektrischen Energiespeichern, Akkumulatoren entsteht Wärme infolge der hohen übertragenen elektrischen Leistungen, elektrischen Strömen nicht nur an dem Kabel, mit dem ein Ladestecker beispielsweise mit einer Ladestation verbunden ist, sondern auch an dem Ladestecker und insbesondere innerhalb des Ladesteckers, beispielsweise an Hochstromkontakten, über die ein elektrischer Kontakt mit zugeordneten Gegenkontakten, beispielsweise auf Seiten einer Ladebuchse, an einem Elektrofahrzeug hergestellt wird, wenn der Ladestecker in die Ladebuchse eingesteckt ist und die elektrische Leistung übertragen wird.

Solche Hochstromkontakte, die aus einem elektrisch leitfähigen Material, beispielsweise aus einem Kupferwerkstoff gefertigt sind, erwärmen sich, wenn ein Ladestrom über die Kontakte, Steckkontakte, Hochstromkontakte fließt, wobei grundsätzlich die Kontakte in Abhängigkeit von dem zu übertragenden Ladestroms so zu dimensionieren sind, dass die Kontakte eine hinreichende Stromtragfähigkeit aufweisen und eine Erwärmung an den Kontaktelementen begrenzt ist. Hierbei gilt, dass ein Kontakt umso größer zu dimensionieren ist, je größer der zu übertragende Ladestrom ist. Einer Skalierung der Kontaktelementgröße mit steigendem Ladestrom sind jedoch aufgrund des damit einhergehenden Bauraumbedarfs, des Gewichts und der Kosten Grenzen gesetzt. Es besteht daher ein Bedürfnis, einen großen Ladestrom mit einem vergleichsweise klein dimensionierten Kontakt zu übertragen.

Im Rahmen der angestrebten Elektromobilität sind hohe Ladeströme von besonderer Bedeutung. Nur auf diese Weise lassen sich Elektrofahrzeuge bzw. dessen Energiespeicher in kurzer Zeit "auftanken".

Ein im Stand der Technik grundsätzlich bekannter Lösungsansatz ist es, Kontakte, Hochstromkontakte passiv oder aktiv zu kühlen, um auch bei kleiner dimensionierten Bauelementen die Übertragung der elektrischen Leistung mit begrenzter Erwärmung der leistungsübertragenden Bauteile zu realisieren.

Die DE 10 2016 204 895 A1 offenbart ein Leistungskontaktsystem für einen Ladestecker und/oder eine Ladebuchse sowie einen Ladestecker zur Kopplung mit einer korrespondierenden Verbindungsvorrichtung und zur Übertragung elektrischer Energie. Die zu lösende Aufgabe besteht darin, einen Ladestecker bereitzustellen, mittels dem erhöhte Ladeströme übertragbar sind, ohne dass sich der Ladestecker übermäßig erhitzt.

Zur Lösung wird ein Leistungskontaktsystem für einen Ladestecker und/oder eine Ladebuchse vorgeschlagen, dass einen Leistungskontakt mit einem ersten Anschlussbereich zur galvanischen Verbindung mit einem elektrischen Energieempfänger und einen zweiten Anschlussbereich zur galvanischen Verbindung mit einem Ladekabel aufweist.

Ein mit dem zweiten Anschlussbereich des Leistungskontakts in direktem Kontakt stehendes Kühlelement ist vorgesehen, wobei das Kühlelement einen Kühlfluidzulaufanschluss und einen mit diesem mittels eines innerhalb des Kühlelements angeordneten Kühlfluidkanal fluidverbundenen Kühlfluidablaufanschluss aufweist. Der Kühlfluidzulaufanschluss und der Kühlfluidablaufanschluss sind in dem Kühlelementdeckel angeordnet und sind durchströmbar mit dem Kühlelement verbunden, welches derart konzipiert ist, sodass das Kühlfluid nicht mit dem Leistungskontakt in direktem Kontakt steht.

Die US 2015/0217654 A1 von Tesla Motors zeigt ein Ladesystem für ein Elektrofahrzeug, aufweisend eine Stromversorgung, ein Kabel mit einem ersten und einem zweiten Ende, wobei das erste Ende an der Stromversorgung befestigt ist, wobei das Kabel einen Ladedraht und eine Kühlleitung umfasst, von denen sich jede vom ersten Ende bis zum zweiten Ende erstreckt; und einen Verbinder, der an dem zweiten Ende des Kabels befestigt ist, wobei der Verbinder einen Formfaktor aufweist, der einer Ladestation des Elektrofahrzeugs entspricht; wobei die Kühlleitung geeignet ist, ein Fluid zu transportieren, das den Ladedraht, Leitung kühlt. Die Kühlleitung und der stromführende Ladedraht, Leitung sind praktisch als Leitungspaket angeordnet.

Ein aus der DE 10 2010 007 975 B4 bekanntes Ladekabel mit Kontakten, Hochstromkontakten weist eine Kühlleitung auf, die eine Zuleitung und eine Rückleitung für ein Kühlmittel umfasst und somit einen Kühlmittelfluss hin und zurück in dem Ladekabel ermöglicht. Die Kühlleitung der DE 10 2010 007 975 B4 dient hierbei zum einen zum Abführen von an einem Energiespeicher eines Fahrzeugs entstehender Verlustwärme, zudem aber auch zum Kühlen des Kabels an sich. Um die Kühlwirkung des Ladekabels zu erreichen ist das Ladekabel konzentrisch innerhalb der Kühlleitung angeordnet und von Kühlmedium umströmt.

Einen Elektroanschlusskörper für einen Ladestecker mit einer Kühleinrichtung zeigt die EP 3 043 421 A1. Vorgestellt ist ein Elektroanschlusskörper für einen Ladestecker und/oder eine Ladebuchse mit einem ersten Anschlussbereich zur galvanischen Verbindung mit einem elektrischen Energieempfänger und einen zweiten Anschlussbereich zur galvanischen Verbindung mit einer elektrischen Energiequelle aufweist und wobei der Elektroanschlusskörper einen im Elektroanschlusskörper ausgebildeten Kühlfluidkanal aufweist.

Die bekannten Kühllösungen für Steckverbindungen, Ladestecker, Kontakte, Hochstromkontakte sind in verschiedener Hinsicht unvorteilhaft oder verbesserungswürdig. Häufig sind die Kühlmediumvolumenströme infolge der reduzierten Querschnitte der Zu- und Abfuhrleitungen zum Kühlelement nicht ausreichend. Auch das Volumen des Kühlelementes ist in vielen Fällen unterdimensioniert.

Ein weiteres Problem effektiver Kühlung ergibt sich durch den häufig unzureichenden Wärmeübergang von den Zonen und Bereichen erhöhter Temperatur und dem Kühlmedium. Ursächlich dafür sind vielfach die zu kleinen Kontaktflächen zwischen den zu kühlenden Komponenten bzw. Kontakten und den Kühlelementen. Meist sind die kühlmediumführenden und die hochstromführenden Komponenten separate, in sich geschlossene Bauelemente, mit dem dadurch resultierenden verringerten Wärmeübergang zwischen beiden.

Viele verfügbare Kühleinrichtungen sind derart konzipiert, dass nur Teilbereiche der Hochstromkontakte einer Kühlleistung ausgesetzt sind. Oft werden nur die Kontaktbereiche zum Gegenstecker gekühlt oder es sind die Leitungen einer Kühlwirkung unterliegend. Die Verbindungsabschnitte zwischen Leitung und Kontakt sind meist nur dann gekühlt, wenn es sich bei den elektrisch leitenden Zuleitungen um geflechtartige Aufbauten handelt.

Auch sicherheitstechnisch können viele angebotene Kühlungslösungen für Hochstromkontakte nicht überzeugen. Die verfügbaren Kühleinrichtungen bieten keine Absicherung oder Notfallfunktion bei Ausfall der Kühlung beispielsweise durch Defekte an der Kühlmediumpumpe oder Störungen in der Zu- oder Ableitung von Kühlmedium.

Es ist daher Aufgabe der Erfindung bestehende Kühlungslösungen für Steckverbinder weiterzuentwickeln, sodass die zuvor genannten Nachteile des Standes der Technik wenigstens teilweise reduziert und die Kühlleistung verbessert werden.

Diese Aufgabe wird durch die Merkmalskombination gemäß Patentanspruch 1 gelöst.

Erfindungsgemäß wird ein Steckverbinder, ausgebildet zur Übertragung elektrischer Leistung über wenigstens zwei in einem Kontaktträger gelagerte Kontaktteile und zur Kühlung derselben bei der Übertragung elektrischer Leistung, mit je einem Verbindungselement, an dem eine elektrische Leitung verbunden ist, vorgeschlagen. Dabei ist eine, vorzugsweise genau eine Zuflussleitung zum Zuführen eines Kühlfluids in einen gemeinsamen vom einem Kühlgehäuse begrenzten Kühlraum vorgesehen und jeweils ein Schlauch um die Leitungen herum angeordnet, zum Wegfördern des Kühlfluids aus dem Kühlraum. Ferner ist das jeweilige Verbindungselement zumindest abschnittsweise in dem Kühlgehäuse angeordnet und umfasst eine Schlauchaufnahme zur Aufnahme des jeweiligen Schlauches, in welchem die entsprechende elektrische Leitung derart aufgenommen ist, dass ein Leitungskühlbereich für die elektrische Leitung ausgebildet ist. Darüber hinaus umfasst das Verbindungselement wenigstens eine Öffnung zur strömungstechnischen Kopplung zumindest des Kühlraums. Das Kühlgehäuse weist wenigstens einen Einlass für das Kühlfluid auf, welcher mit der Zuflussleitung für das Kühlfluid verbunden ist. Des Weiteren umfasst das Kühlgehäuse ein Strömungsrichtungssteuermittel, welches derart geformt und/oder ausgebildet ist, dass ein durch den Einlass einströmendes Kühlfluid zumindest in dem Kühlraum zumindest abschnittsweise das jeweilige Verbindungselement rotierend umströmt.

Vorteilhaft daran ist, dass bei einem entsprechend gekühlten Steckverbinder die Wärme durch ein Kühlfluid mittels Konvektion abgeführt wird, was einen wesentlich kleineren Kabeldurchmesser bzw. einem wesentlich höheren Stromtransport bei gleichem Kabelquerschnitt ermöglicht. Dies wird durch das Strömungsrichtungssteuermittel erreicht, welches eine Ausrichtung des Fluids beim Einströmen ins Kabel bewirkt, damit das Fluid von Anfang eine Rotation aufweist. Auf diese Weise wird die Konvektion bzw. die Wärmeaufnahme des Kühlfluids aus dem Wärmeträger optimiert, da das Fluid mit einer möglichst hohen Geschwindigkeit und über die größtmögliche Länge den Wärmeträger umströmt und somit die Verweildauer hoch ist.

In einer vorteilhaften Ausführungsvariante ist vorgesehen, dass das Strömungsrichtungssteuermittel das Kühlfluid nahezu gleichartig auf die jeweiligen Verbindungselemente verteilt, vorzugsweise mit einer gegenläufigen Rotationsrichtung der Strömung des Kühlfluids um das entsprechende Verbindungselement. Dadurch werden die jeweiligen Verbindungselemente in etwa gleichmäßig gekühlt. Ferner lassen sich die die Strömung beeinflussenden Mittel in einfacherer konstruktiver Weise gestalten und designen.

In einer bevorzugten Ausführungsform der Erfindung sind genau eine Zuflussleitung und genau zwei mit je einem Verbindungselement verbundene elektrische Leitungen mit jeweils einem um die Leitungen herum angeordneten Schlauch zum Wegfördern des Kühlfluids aus dem Kühlraum vorgesehen. Dabei ist günstig, dass der Druckabfall im Steckverbinder stark reduziert ist, da dieser lediglich mit dem halben Volumenstrom an Kühlfluid im Vergleich zur Zuflussleitung durchflossen wird. Zusätzlich ist wegen des niedrigen Druckabfalles über den Einlass der gesamte Druckabfall des Steckverbinders deutlich reduziert. Darüber hinaus ergibt sich eine in etwa symmetrische Temperaturverteilung in den Kontaktteilen und den Verbindungselementen.

Der erfindungsgemäße Steckverbinder ist in der erfindungsgemäßen Ausführungsvariante so ausgebildet, dass der jeweilige Schlauch an der Schlauchaufnahme des entsprechenden Verbindungselements derart fixiert ist, dass der Kühlraum und der Leitungskühlbereich mittels der Öffnung strömungstechnisch gekoppelt sind. Dabei umströmt das Kühlfluid den elektrischen Leiter in dem Leitungskühlbereich zumindest abschnittsweise rotierend. Aufgrund einer entsprechend ausgebildeten Öffnung bzw. Kopplung des Kühlraums und des Leitungskühlbereichs wird die Rotation der Kühlfluids möglichst weit im Kabel aufrechterhalten. Dadurch wird die Kühlleistung erheblich verbessert, da der Weg und damit die Verweildauer des Kühlfluids um das Kabel verlängert ist.

In einem Ausführungsbeispiel der Erfindung ist vorgesehen, dass das Kühlgehäuse derart angeordnet ist, dass der Kühlraum zumindest im Bereich einer Leitungsverbindung des Verbindungselements für die elektrische Leitung ausgebildet ist. Vorteilhaft daran ist, dass eine Kühlung eines HotSpots bzw. einer der sich am stärksten erwärmenden Bereiche des Steckverbinders gekühlt wird. Ferner ist eine Ausführung günstig, bei welcher die Leitungsverbindung mittels einer Crimpverbindung hergestellt ist.

In einer weiteren vorteilhaften Variante ist erfindungsgemäß vorgesehen, dass das Kühlgehäuse derart angeordnet ist, dass die Kontaktteile zumindest abschnittsweise aus/von dem Kühlgehäuse herausragen/hervorstehen. Auf diese Weise ist zum einen eine Kontaktierung der Kontaktteile und zum anderen eine direkte Kühlung der Kontaktteile gewährleistet.

In einer bevorzugten Ausführung des vorliegenden Steckverbinders ist ferner vorgesehen, dass das Strömungsrichtungssteuermittel einen an dem Einlass ausgebildeten in einen Strömungsbereich hineinragenden Vorsprung umfasst, welcher eine Einströmrichtung für das einströmende Kühlfluid vorgibt. Weiter vorteilhaft ist es, wenn das Strömungsrichtungssteuermittel derart ausgebildet ist, dass das einströmende Kühlfluid eine tangentiale Einströmung in den Kühlraum aufweist. Mittels des Vorsprungs ist eine Steuerung der Flussrichtung beim Einströmen des Fluids zur Erzeugung einer Rotation umgesetzt. Aufgrund eines derart ausgebildeten Einlasses bzw. Strömungsrichtungssteuermittels ist eine tangentiale Einströmung für die Kontaktteile und die Verbindungselemente realisiert, wodurch die Geschwindigkeit und dementsprechend auch die Konvektion und Kühlleistung erhöht ist.

In einem Ausführungsbeispiel der Erfindung ist vorgesehen, dass das Kühlgehäuse, der Schlauch und das Verbindungselement durch einen Kühlgehäuseadapter miteinander gekoppelt sind. Ferner sind die vorstehenden Komponenten mittels einer geeigneten Dichtung abgedichtet. Durch den Kühlgehäuseadapter ist eine Anbindung der Komponenten an den Steckverbinder verbessert.

In einer weiteren vorteilhaften Ausführungsvariante ist vorgesehen, dass der jeweilige Schlauch mit der entsprechenden elektrischen Leitung in einer gemeinsamen Außenisolation aufgenommen ist, wobei die Außenisolation vorzugsweise mit einem Infill gefüllt ist. Dabei bezeichnet Infill eine Füllung des Schlauchs mit einem geeigneten Füllmaterial. In einer alternativen Ausführung ist ferner die Zuflussleitung in der gemeinsamen Außenisolation aufgenommen. Auf diese Weise ist ein kompaktes und einfach zu handhabendes Kabel für den Steckverbinder bereitgestellt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines Steckverbinders;
- Fig. 2: einen Längsschnitt des Steckverbinders;
- Fig. 3: einen weiteren Längsschnitt des Steckverbinders;
- Fig. 4: einen Querschnitt des Steckverbinders;
- Fig. 5: eine schematische Ansicht einer Strömung eines Kühlfluids durch den Steckverbinder;
- Fig. 6: einen Querschnitt einer gemeinsamen Außenisolation eines Steckverbinders.

Die Figuren sind beispielhaft schematisch. Gleiche Bezugszeichen in den Figuren weisen auf gleiche funktionale und/oder strukturelle Merkmale hin.

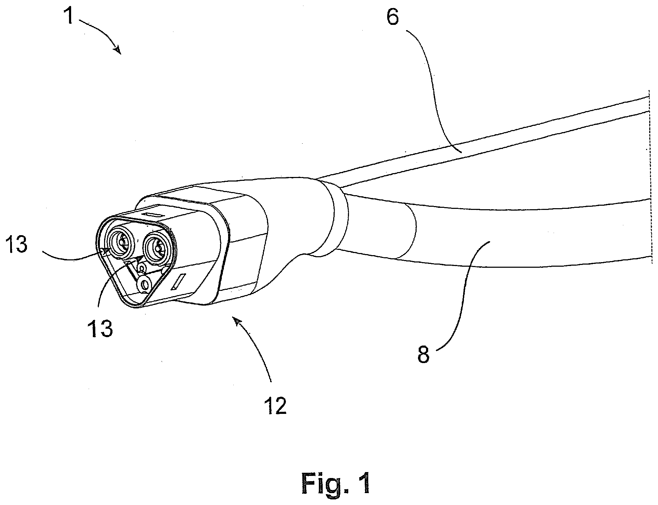

In Figur 1 ist eine perspektivische Ansicht eines Steckverbinders 1 ausgebildet zur Übertragung elektrischer Leistung über wenigstens zwei in einem Kontaktträger 12 gelagerte Kontaktteile 13 und zur Kühlung derselben bei der Übertragung elektrischer Leistung dargestellt. Der Steckverbinder 1 umfasst ein Kabel mit einer Außenisolation 8 und eine Zuflussleitung 6 für ein Kühlfluid.

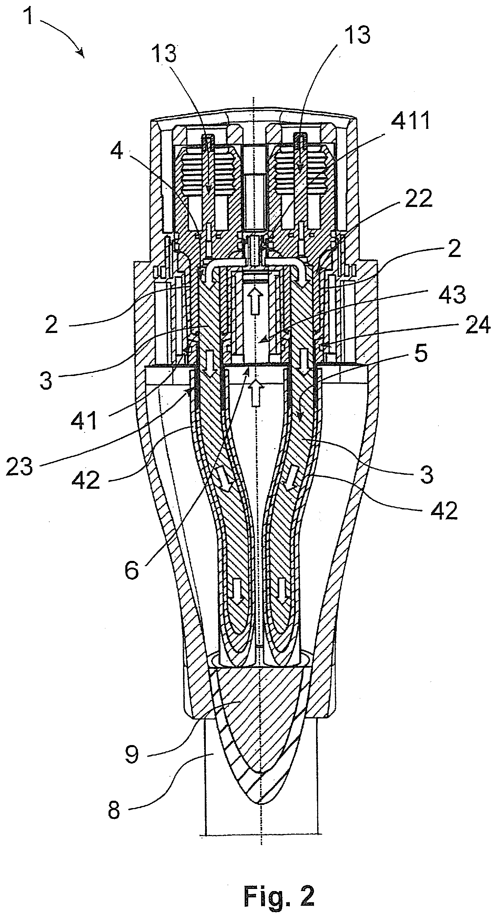

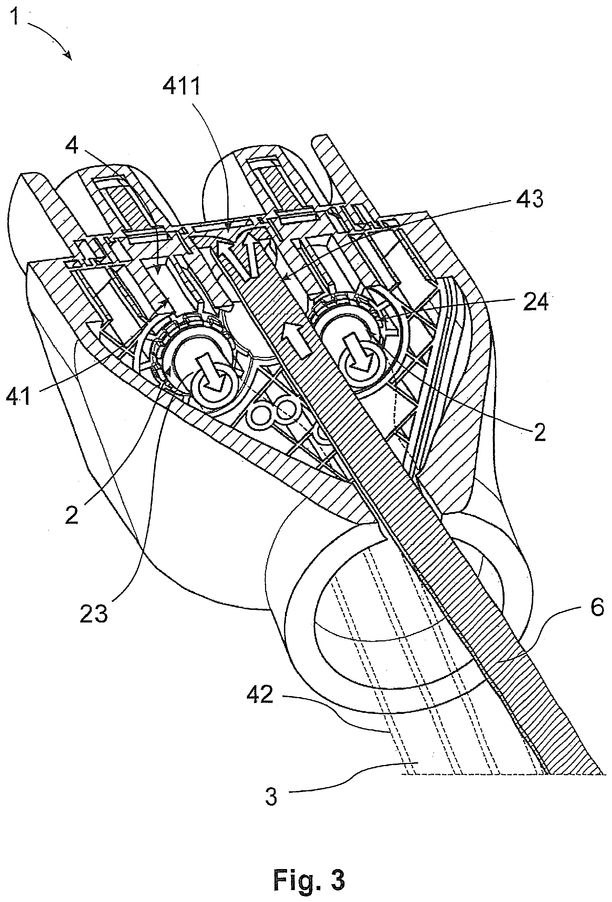

Figur 2 zeigt einen Längsschnitt des Steckverbinders 1 aus Figur 1 und in Figur 3 ist ein weiterer Längsschnitt des Steckverbinders 1 dargestellt. Im Folgenden werden die Figuren 2 und 3 deshalb gemeinsam beschrieben.

Der Steckverbinder 1 umfasst genau eine Zuflussleitung 6 für ein Kühlfluid und genau zwei mit je einem Verbindungselement 2 verbundene elektrische Leitungen 3 mit jeweils einem um die Leitungen 3 herum angeordneten Schlauch 42 zum Wegfördern des Kühlfluids aus einem Kühlraum 4. Die Zuflussleitung 6 ist zum Zuführen des Kühlfluids in den gemeinsamen von einem Kühlgehäuse 41 begrenzten Kühlraum 4 vorgesehen.

Darüber hinaus ist das Kühlgehäuse 41 derart angeordnet, dass der Kühlraum 4 zumindest im Bereich einer Leitungsverbindung 22 des Verbindungselements 2 für die elektrische Leitung 3 ausgebildet ist. Die Leitungsverbindung 22 ist mittels einer Crimpverbindung hergestellt. Ferner weist das Kühlgehäuse 41 wenigstens einen Einlass 43 für das Kühlfluid auf, welcher mit der Zuflussleitung 6 für das Kühlfluid verbunden ist.

Des Weiteren umfasst das Kühlgehäuse 41 ein Strömungsrichtungssteuermittel 411, welches derart geformt und/oder ausgebildet ist, dass ein durch den Einlass 43 einströmendes Kühlfluid in dem Kühlraum 4 zumindest abschnittsweise das jeweilige Verbindungselement 2 rotierend umströmt. Dabei verteilt das Strömungsrichtungssteuermittel 411 das Kühlfluid nahezu gleichartig auf die jeweiligen Verbindungselemente 2 mit einer gegenläufigen Rotationsrichtung der Strömung des Kühlfluids um das entsprechende Verbindungselement 2. Ferner ist das Strömungsrichtungssteuermittel 411 derart ausgebildet ist, dass das einströmende Kühlfluid eine tangentiale Einströmung in den Kühlraum 4 aufweist.

Das jeweilige Verbindungselement 2 ist abschnittsweise in dem Kühlgehäuse 41 angeordnet und umfasst ferner eine Schlauchaufnahme 23 zur Aufnahme des jeweiligen Schlauches 42, in welchem die entsprechende elektrische Leitung 3 derart aufgenommen ist, dass ein Leitungskühlbereich 5 für die elektrische Leitung 3 ausgebildet ist. Außerdem umfasst das Verbindungselement 2 wenigstens eine Öffnung 24 zur strömungstechnischen Kopplung des Kühlraums 4. Dabei ist der jeweilige Schlauch 42 an der Schlauchaufnahme 23 des entsprechenden Verbindungselements 2 derart fixiert, dass der Kühlraum 4 und der Leitungskühlbereich 5 mittels der Öffnung 24 strömungstechnisch gekoppelt sind. Auf diese Weise umströmt das Kühlfluid den elektrischen Leiter 3 in dem Leitungskühlbereich 5 zumindest abschnittsweise rotierend.

Außerdem ist das Kühlgehäuse 41 derart angeordnet, dass die Kontaktteile 13 zumindest abschnittsweise aus/von dem Kühlgehäuse 41 herausragen/hervorstehen.

Der jeweilige Schlauch 42 ist mit der entsprechenden elektrischen Leitung 3 in der gemeinsamen Außenisolation 8 aufgenommen und die Außenisolation 8 ist mit einem Infill 9 gefüllt.

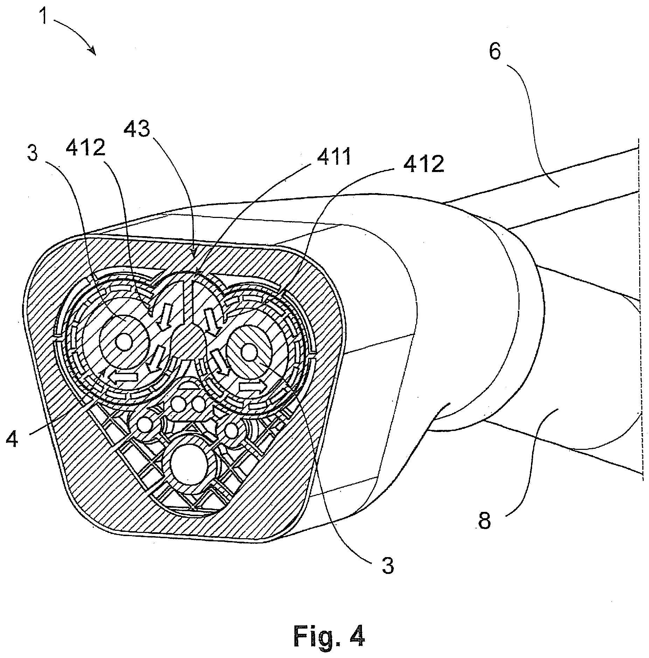

In Figur 4 ist ein Querschnitt des vorstehend gezeigten Steckverbinders 1 dargestellt. Ferner umfasst das Strömungsrichtungssteuermittel 411 einen an dem Einlass 43 ausgebildeten in einen Strömungsbereich hineinragenden Vorsprung 412, welcher eine Einströmrichtung für das einströmende Kühlfluid vorgibt. Das Strömungsrichtungssteuermittel 411 ist derart ausgebildet, dass das einströmende Kühlfluid eine tangentiale Einströmung in den Kühlraum 4 aufweist. Außerdem verteilt das Strömungsrichtungssteuermittel 411 das Kühlfluid nahezu gleichartig auf die jeweiligen Verbindungselemente 2 mit einer gegenläufigen Rotationsrichtung der Strömung des Kühlfluids um das entsprechende Verbindungselement 2.

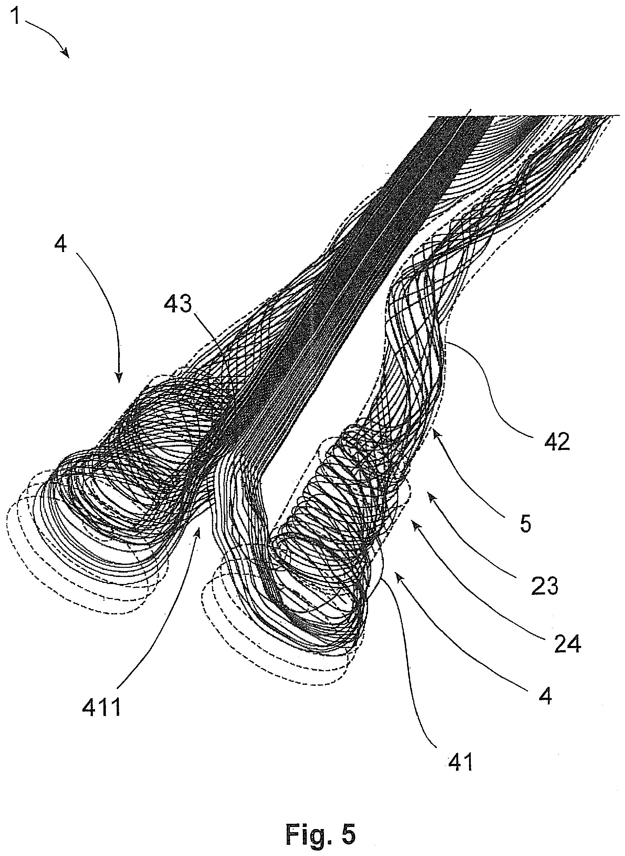

Figur 5 zeigt eine schematische Ansicht einer Strömung eines Kühlfluids durch den vorstehend beschriebenen Steckverbinder 1. Darin ist zu erkennen, dass aufgrund des Strömungsrichtungssteuermittels 411 des Kühlgehäuses 41 ein durch den Einlass 43 einströmendes Kühlfluid in dem Kühlraum 4 das jeweilige Verbindungselement 2 rotierend umströmt. Dabei verteilt das Strömungsrichtungssteuermittel 411 das Kühlfluid nahezu gleichartig auf die jeweiligen Verbindungselemente 2 mit einer gegenläufigen Rotationsrichtung der Strömung des Kühlfluids um das entsprechende Verbindungselement 2. Ferner ist dargestellt, dass durch die Fixierung des jeweiligen Schlauchs 42 an der Schlauchaufnahme 23 des entsprechenden Verbindungselements 2 der Kühlraum 4 und der Leitungskühlbereich 5 mittels der Öffnung 24 strömungstechnisch gekoppelt sind und das Kühlfluid zumindest abschnittsweise in dem Leitungskühlbereich 5 den elektrischen Leiter 3 rotierend umströmt.

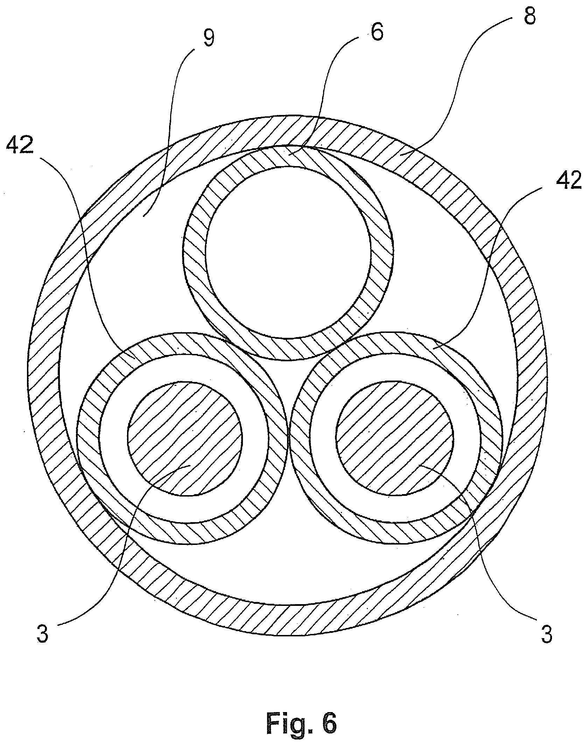

In Figur 6 ist ein Querschnitt einer gemeinsamen Außenisolation 8 eines Steckverbinders 1 dargestellt, bei welcher der jeweilige Schlauch 42 mit der entsprechenden elektrischen Leitung 3 in einer gemeinsamen Außenisolation 8 aufgenommen ist und die Außenisolation 8 mit einem Infill 9 gefüllt ist. Außerdem ist die Zuflussleitung 6 in der gemeinsamen Außenisolation 8 aufgenommen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### Bezugszeichenliste

- 1: Steckverbinder
- 2: Verbindungselement
- 3: Leitung
- 4: Kühlraum
- 5: Leitungskühlbereich
- 6: Zuflussleitung

- 8: Außenisolation
- 9: Infill

- 12: Kontaktträger
- 13: Kontaktteil

- 22: Leitungsverbindung
- 23: Schlauchaufnahme
- 24: Öffnung

- 41: Kühlgehäuse
- 42: Schlauch
- 43: Einlass

- 411: Strömungsrichtungssteuermittel
- 412: Vorsprung

## Patentansprüche

1. Steckverbinder (1), ausgebildet zur Übertragung elektrischer Leistung über wenigstens zwei in einem Kontaktträger (12) gelagerte Kontaktteile (13) und zur Kühlung derselben bei der Übertragung elektrischer Leistung, mit je einem Verbindungselement (2), an dem eine elektrische Leitung (3) verbunden ist,
wobei eine Zuflussleitung (6) zum Zuführen eines Kühlfluids in einen gemeinsamen vom einem Kühlgehäuse (41) begrenzten Kühlraum (4) vorgesehen ist und jeweils ein Schlauch (42) um die Leitungen (3) herum angeordnet ist, zum Wegfördern des Kühlfluids aus dem Kühlraum (4),
wobei das jeweilige Verbindungselement (2) zumindest abschnittsweise in dem Kühlgehäuse (41) angeordnet ist und ferner eine Schlauchaufnahme (23) zur Aufnahme des jeweiligen Schlauches (42) umfasst, in welchem die entsprechende elektrische Leitung (3) derart aufgenommen ist, dass ein Leitungskühlbereich (5) für die elektrische Leitung (3) ausgebildet ist,
wobei das Verbindungselement (2) wenigstens eine Öffnung (24) zur strömungstechnischen Kopplung zumindest des Kühlraums (4) umfasst,
wobei das Kühlgehäuse (41) wenigstens einen Einlass (43) für das Kühlfluid aufweist, welcher mit der Zuflussleitung (6) für das Kühlfluid verbunden ist,
wobei das Kühlgehäuse (41) ein Strömungsrichtungssteuermittel (411) umfasst, welches derart geformt und/oder ausgebildet ist, dass ein durch den Einlass (43) einströmendes Kühlfluid zumindest in dem Kühlraum (4) zumindest abschnittsweise das jeweilige Verbindungselement (2) rotierend umströmt, wobei der jeweilige Schlauch (42) an der Schlauchaufnahme (23) des entsprechenden Verbindungselements (2) derart fixiert ist, dass der Kühlraum (4) und der Leitungskühlbereich (5) mittels der Öffnung (24) strömungstechnisch gekoppelt sind, wobei das Kühlfluid zumindest abschnittsweise in dem Leitungskühlbereich (5) den elektrischen Leiter (3) rotierend umströmt.

2. Steckverbinder (1) gemäß Anspruch 1, wobei das Strömungsrichtungssteuermittel (411) das Kühlfluid nahezu gleichartig auf die jeweiligen Verbindungselemente (2) verteilt, vorzugsweise mit einer gegenläufigen Rotationsrichtung der Strömung des Kühlfluids um das entsprechende Verbindungselement (2).

3. Steckverbinder (1) gemäß Anspruch 1 oder 2, wobei genau eine Zuflussleitung (6) und genau zwei mit je einem Verbindungselement (2) verbundene elektrische Leitungen (3) mit jeweils einem um die Leitungen (3) herum angeordneten Schlauch (42) zum Wegfördern des Kühlfluids aus dem Kühlraum (4) vorgesehen sind.

4. Steckverbinder (1) gemäß einem der vorhergehenden Ansprüche, wobei das Kühlgehäuse (41) derart angeordnet ist, dass der Kühlraum (4) zumindest im Bereich einer Leitungsverbindung (22) des Verbindungselements (2) für die elektrische Leitung (3) ausgebildet ist.

5. Steckverbinder (1) gemäß Anspruch 4, wobei die Leitungsverbindung (22) mittels einer Crimpverbindung hergestellt ist.

6. Steckverbinder (1) gemäß einem der vorhergehenden Ansprüche, wobei das Kühlgehäuse (41) derart angeordnet ist, dass die Kontaktteile (13) zumindest abschnittsweise aus/von dem Kühlgehäuse (41) herausragen/hervorstehen.

7. Steckverbinder (1) gemäß einem der vorhergehenden Ansprüche, wobei das Strömungsrichtungssteuermittel (411) einen an dem Einlass (43) ausgebildeten, in einen Strömungsbereich hineinragenden Vorsprung (412) umfasst, welcher eine Einströmrichtung für das einströmende Kühlfluid vorgibt.

8. Steckverbinder (1) gemäß einem der vorhergehenden Ansprüche, wobei das Strömungsrichtungssteuermittel (411) derart ausgebildet ist, dass das einströmende Kühlfluid eine tangentiale Einströmung in den Kühlraum (4) aufweist.

9. Steckverbinder (1) gemäß einem der vorhergehenden Ansprüche, wobei das Kühlgehäuse (41), der Schlauch (42) und das Verbindungselement (2) durch einen Kühlgehäuseadapter miteinander gekoppelt sind.

10. Steckverbinder (10) gemäß einem der vorhergehenden Ansprüche, wobei der jeweilige Schlauch (42) mit der entsprechenden elektrischen Leitung (3) in einer gemeinsamen Außenisolation (8) aufgenommen sind, wobei die Außenisolation (8) vorzugsweise mit einem Infill (einer Füllung) (9) gefüllt ist.

11. Steckverbinder (1) gemäß Anspruch 10, wobei ferner die Zuflussleitung (6) in der gemeinsamen Außenisolation (8) aufgenommen ist.

## Claims

1. Plug-in connector (1), designed for transmitting electrical power via at least two contact parts (13) mounted in a contact carrier (12) and for cooling the same during the transmission of electrical power, each having a connection element (2) to which an electrical lead (3) is connected,
wherein a supply line (6) is provided for supplying a cooling fluid into a common cooling chamber (4) delimited by a cooling housing (41), and a hose (42) is arranged around each of the leads (3) for conveying the cooling fluid out of the cooling chamber (4),
wherein the respective connection element (2) is arranged, at least in some sections, in the cooling housing (41) and further comprises a hose receiver (23) for receiving the respective hose (42), in which the corresponding electrical lead (3) is received in such a manner that a lead cooling region (5) is realized for the electrical lead (3),
wherein the connection element (2) comprises at least one opening (24) for fluidic coupling of at least the cooling chamber (4),
wherein the cooling housing (41) has at least one inlet (43) for the cooling fluid, which is connected to the supply line (6) for the cooling fluid,
wherein the cooling housing (41) comprises a flow-direction control means (411) that is shaped and/or realized in such a manner that a cooling fluid flowing in through the inlet (43) flows, at least in the cooling chamber (4), at least in some sections, in a rotating manner around the respective connection element (2), wherein the respective hose (42) is fixed to the hose receiver (23) of the corresponding connection element (2) in such a manner that the cooling chamber (4) and the lead cooling region (5) are fluidically coupled by means of the opening (24), wherein the cooling fluid flows around the electrical lead (3) in a rotating manner in the lead cooling region (5), at least in some sections.

2. Plug-in connector (1) according to Claim 1, wherein the flow-direction control means (411) distributes the cooling fluid almost uniformly to the respective connection elements (2), preferably with an opposing direction of rotation of the flow of the cooling fluid around the corresponding connection element (2).

3. Plug-in connector (1) according to Claim 1 or 2, wherein exactly one supply line (6) and exactly two electrical leads (3), each connected to a respective connection element (2), are provided, each having a hose (42) arranged around the leads (3) for the purpose of conveying the cooling fluid out of the cooling chamber (4).

4. Plug-in connector (1) according to any one of the preceding claims, wherein the cooling housing (41) is arranged in such a manner that the cooling chamber (4) is realized at least in the region of a lead connection (22) of the connection element (2) for the electrical lead (3).

5. Plug-in connector (1) according to Claim 4, wherein the lead connection (22) is produced by means of a crimp connection.

6. Plug-in connector (1) according to any one of the preceding claims, wherein the cooling housing (41) is arranged in such a manner that the contact parts (13) protrude/project at least in some sections out of/from the cooling housing (41).

7. Plug-in connector (1) according to any one of the preceding claims, wherein the flow-direction control means (411) comprises a projection (412), realized at the inlet (43) and projecting into a flow region, that defines an inflow direction for the inflowing cooling fluid.

8. Plug-in connector (1) according to any one of the preceding claims, wherein the flow-direction control means (411) is realized in such a manner that the inflowing cooling fluid has a tangential inflow into the cooling chamber (4).

9. Plug-in connector (1) according to any one of the preceding claims, wherein the cooling housing (41), the hose (42) and the connection element (2) are coupled to one another by a cooling-housing adapter.

10. Plug-in connector (10) according to any one of the preceding claims, wherein the respective hose (42) with the corresponding electrical lead (3) is accommodated in a common outer insulation (8), wherein the outer insulation (8) is preferably filled with an infill (a filling) (9).

11. Plug-in connector (1) according to Claim 10, wherein further the supply line (6) is accommodated in the common outer insulation (8).

## Revendications

1. Connecteur enfichable (1) formé pour transmettre une puissance électrique par au moins deux parties de contact (13) montées dans un support de contact (12) et pour refroidir celles-ci lors de la transmission de puissance électrique, avec respectivement un élément de raccordement (2), auquel est raccordée une ligne électrique (3),
une ligne d'arrivée (6) étant prévue pour amener un fluide de refroidissement dans un espace de refroidissement commun (4) délimité par un boîtier de refroidissement (41), et un tuyau (42) étant respectivement disposé autour des lignes (3) pour évacuer le fluide de refroidissement de l'espace de refroidissement (4),
l'élément de raccordement (2) respectif étant disposé au moins par sections dans le boîtier de refroidissement (41) et comprenant en outre un logement de tuyau (23) destiné à recevoir le tuyau (42) respectif, dans lequel la ligne électrique (3) correspondante est reçue de telle manière qu'une zone de refroidissement de ligne (5) est formée pour la ligne électrique (3), l'élément de raccordement (2) comprenant au moins une ouverture (24) pour l'accouplement fluidique au moins de l'espace de refroidissement (4),
le boîtier de refroidissement (41) comportant au moins une entrée (43) pour le fluide de refroidissement, laquelle est raccordée à la ligne d'arrivée (6) pour le fluide de refroidissement,
le boîtier de refroidissement (41) comprenant un moyen de commande de direction d'écoulement (411), qui est façonné et/ou formé de telle manière qu'un fluide de refroidissement s'écoulant par l'entrée (43) s'écoule au moins par sections autour de l'élément de raccordement (2) respectif de manière rotative dans l'espace de refroidissement (4), le tuyau (42) respectif étant fixé sur le logement de tuyau (23) de l'élément de raccordement (2) correspondant de telle manière que l'espace de refroidissement (4) et la zone de refroidissement de ligne (5) sont couplés fluidiquement au moyen de l'ouverture (24), le fluide de refroidissement s'écoulant autour du conducteur électrique (3) de manière rotative au moins par sections dans la zone de refroidissement de ligne (5).

2. Connecteur enfichable (1) selon la revendication 1, le moyen de commande de direction d'écoulement (411) distribuant le fluide de refroidissement pratiquement de manière identique sur les éléments de raccordement (2) respectifs, de préférence avec une direction de rotation opposée de l'écoulement du fluide de refroidissement autour de l'élément de raccordement (2) correspondant.

3. Connecteur enfichable (1) selon la revendication 1 ou 2, exactement une ligne d'arrivée (6) et exactement deux lignes électriques (3) raccordées respectivement à un élément de raccordement (2) étant prévues avec chacune un tuyau (42) disposé autour des lignes (3) pour évacuer le fluide de refroidissement de l'espace de refroidissement (4).

4. Connecteur enfichable (1) selon l'une des revendications précédentes, le boîtier de refroidissement (41) étant disposé de telle manière que l'espace de refroidissement (4) est formé au moins dans la zone d'un raccordement de ligne (22) de l'élément de raccordement (2) pour la ligne électrique (3).

5. Connecteur enfichable (1) selon la revendication 4, le raccordement de ligne (22) étant fabriqué au moyen d'un raccordement par sertissage.

6. Connecteur enfichable (1) selon l'une des revendications précédentes, le boîtier de refroidissement (41) étant disposé de telle manière que les parties de contact (13) dépassent/font saillie au moins par sections du boîtier de refroidissement (41).

7. Connecteur enfichable (1) selon l'une des revendications précédentes, le moyen de commande de direction d'écoulement (411) comprenant une partie faisant saillie (412) formée sur l'entrée (43) et dépassant dans une zone d'écoulement, laquelle spécifie une direction de flux entrant pour le fluide de refroidissement affluant.

8. Connecteur enfichable (1) selon l'une des revendications précédentes, le moyen de commande de direction d'écoulement (411) étant formé de telle manière que le fluide de refroidissement affluant présente un flux entrant tangentiel dans l'espace de refroidissement (4).

9. Connecteur enfichable (1) selon l'une des revendications précédentes, le boîtier de refroidissement (41), le tuyau (42) et l'élément de raccordement (2) étant couplés les uns aux autres par un adaptateur de boîtier de refroidissement.

10. Connecteur enfichable (10) selon l'une des revendications précédentes, le tuyau (42) respectif avec la ligne électrique (3) correspondante étant reçu dans une isolation extérieure (8) commune, l'isolation extérieure (8) étant de préférence remplie d'un élément de remplissage (remplissage) (9).

11. Connecteur enfichable (1) selon la revendication 10, la ligne d'arrivée (6) étant en outre reçue dans l'isolation extérieure (8) commune.
